# EUROPÄISCHE PATENTSCHRIFT

(11) **EP 1 051 069 B1**
(45) Veröffentlichungstag und Bekanntmachung des Hinweises auf die Patenterteilung: **02.04.2003**
(21) Anmeldenummer: 99904750.9
(22) Anmeldetag: 07.01.1999
(51) Int. Cl.: A01M 1/14

(54) **VORRICHTUNG ZUM ANLOCKEN UND FANGEN VON INSEKTEN**
DEVICE FOR LURING AND CATCHING INSECTS
PROCEDE POUR ATTIRER ET CAPTURER DES INSECTES

(30) Priorität: 26.01.1998 DE 19802750
(43) Veröffentlichungstag der Anmeldung: 15.11.2000
(73) Patentinhaber: LTS Lohmann Therapie-Systeme AG, 56626 Andernach (DE)
(72) Erfinder: KLOCZKO, Malgorzata, D-53545 Linz (DE); ROREGER, Michael, D-56567 Neuwied (DE)
(74) Vertreter: Flaccus, Rolf-Dieter, Dr.
(86) Internationale Anmeldenummer: EP9900053
(87) Internationale Veröffentlichungsnummer: WO99037146

(56) Entgegenhaltungen:
- DE-A- 19 609 544
- FR-A- 2 468 305
- US-A- 4 992 268
- US-A- 5 258 176
- PATENT ABSTRACTS OF JAPAN vol. 017, no. 119 (C-1034), 12. März 1993 & JP 04 300804 A (NITTO DENKO CORP), 23. Oktober 1992
- DATABASE WPI Section Ch, Week 7904 Derwent Publications Ltd., London, GB; Class A18, AN 79-06816B XP002103550 & JP 53 142532 A (ONO GIJUTSU KENKYUS) , 12. Dezember 1978
- DATABASE WPI Section Ch, Week 7915 Derwent Publications Ltd., London, GB; Class A97, AN 79-28583B XP002103551 & JP 54 028825 A (EARTH SEIYAKU KK) , 3. März 1979

## Beschreibung

Die Erfindung betrifft eine Insektenklebefalle in Form einer einteiligen, lockstoffhaltigen Vorrichtung zum Anlocken von Insekten mittels Lockstoffen und Fangen der angelockten Insekten durch eine Haftklebefläche. Weiterhin betrifft die Erfindung ein Verfahren zur Herstellung sowie die Verwendung der Vorrichtung.

Vorrichtungen zum Anlocken und Fangen von Insekten mittels Lockstoffallen sind allgemein bekannt. Sie werden als wichtiges Mittel zur Schädlingsbekämpfung eingesetzt und dienen insbesondere zur Früherkennung von Insekten und zur Abschätzung der Befallsstärke, das heißt zum Bestandsmonitoring. Darüber hinaus bieten sie die Möglichkeit, den Erfolg von chemischen Bekämpfungsmaßnahmen zu überprüfen. Weiterhin können sie bei niedrigen Insektenpopulationsdichten, z.B. in Privathaushalten, zur völligen Schädlingseliminierung eingesetzt werden.

Das Wirkprinzip aller derzeit in der Praxis eingesetzten Lockstoffallen ist gleich: die flüchtigen Lockstoffe werden aus der Falle an die Umgebung abgegeben und im Luftraum verteilt. Die bereits auf geringe Lockstoffreize reagierenden Schadinsekten suchen gezielt die "Geruchsquelle" auf. Einmal angelockt, bleiben sie in der Regel an der Kleberfläche der Fangvorrichtung haften.
Als Attraktantien werden entweder Fraßlockstoffe, die die Insektennahrung simulieren, oder sogenannte Pheromone eingesetzt. Unter Pheromonen versteht man durch Insekten selbst produzierte, artspezifische Duftstoffe, die der Kommunikation dienen, wobei verschiedene Pheromontypen, unter anderem Sexual- und Aggregationspheromone, unterschieden werden. Sexuallockstoffe dienen der Partnerfindung: das geschlechtsreife, paarungsbereite Weibchen lockt mit seinem Duftstoff männliche Tiere an. Durch die Aggregationspheromone, die im Unterschied zu Sexuallockstoffen durch beide Geschlechter produziert werden, wird den Artgenossen mitgeteilt, daß der Pheromon-Absender ein geeignetes Futter- und/oder Brutsubstrat gefunden hat.

Synthetisch hergestellte Lockstoffe können für ihren kommerziellen Einsatz im Bereich des Insektenmonitorings unterschiedlich verarbeitet werden. Sie können z.B. an ein polymeres Trägermaterial (Kautschuk, Polyethylen, Polyvinylchlorid oder Cellulosederivate) gebunden und in Form eines separaten Köders, beispielsweise einer Kapsel, auf der Kleberfläche der Falle plaziert oder in den Klebstoff eingearbeitet sein.

Je nach Art der Integration von Lockstoffen in eine Insektenfalle kann man die auf dem Markt befindlichen und aus dem Stand der Technik bekannten Insektenklebefallen in drei Gruppen unterteilen. Diese werden im folgenden kurz dargestellt:

### A Zwei-Komponentensysteme

Es handelt sich hierbei um Systeme, die einen Fallenkörper mit einer Haftklebefläche (Klebetafel oder -streifen) und einen separat verpackten Lockstoffköder umfassen. Der Köder wird vor der Anwendung aus der Verpackung entnommen und an der Haftklebefläche angebracht.
Die aus dem Stand der Technik bekannten Köder sind unterschiedlich ausgestaltet, beispielsweise in Kapsel-, Beutel- oder Hütchenform, und enthalten einen oder mehrere Lockstoffe (Kombiköder). Bei fast allen handelsüblichen Ködern handelt es sich um Geschlechtspheromone. Die Pheromonsubstanz ist an ein Trägermaterial gebunden und kann während der Anwendungszeit der Falle aus dem Material ungehindert diffundieren.
Um Pheromonverlusten während der Lagerung vorzubeugen, werden die Köder in der Regel in ein aromadichtes Material verpackt.

In der Praxis der Schädlingsbekämpfung ist die Anwendung solcher zweiteiliger Insektenfangvorrichtungen mit den im folgenden auswahlweise genannten Nachteilen behaftet und entsprechend problematisch:
- Da Pheromonsubstanzen aus den oben beschriebenen Ködern lediglich diffusionsgesteuert an die Umgebungsluft abgegeben werden, kommt es in der Initialphase der Anwendung, bedingt durch das anfänglich hohe Konzentrationsgefälle, zu relativ hohen Freisetzungsraten, die jedoch im Laufe der Zeit stark zurückgehen. Eine kontinuierliche und gleichmäßige Pheromonfreisetzung über längere Anwendungszeiträume aufrechtzuerhalten, ist mittels dieser Systeme nicht möglich.
- Die Pheromon-Wirkstoffbeladung der Köder kann aufgrund ihres thermische Schritte umfassenden Herstellungsprozesses und der hohen Flüchtigkeit der Aktivsubstanzen nicht genau eingestellt werden.
- Der zweiteilige Aufbau erfordert einen höheren Verpakkungsaufwand, da die beiden Komponenten, Klebschicht des Fallenkörpers und Pheromonköder, Alterungsprozessen unterliegen und während der Lagerung vor Umwelteinflüssen geschützt werden müssen.
- Aufgrund des Zweikomponenten-Aufbaus sind diese Fallen relativ kompliziert in der Handhabung, was insbesondere im Falle der gewerblichen Schädlingsbekämpfung ins Gewicht fällt.

### B Einteilige Systeme mit Laminataufbau

Um Insektenfallen insbesondere in ihrer Handhabung anwendungsfreundlicher zugestalten, wurden in der Vergangenheit einteilige Systeme entwickelt.

Hierzu gehören hauptsächlich die in den japanischen Patentschriften JP 4-300804 und JP 54-28825 beschriebenen Vorrichtungen. Sie betreffen Insektenklebebefallen, vorzugsweise zur Anwendung beim Befallsmonitoring von Küchenschaben, die keinen separaten Köder ausweisen. Bei den in oben genannten Schriften dargestellten Fallen ist der Lockstoff in eine Polymerschicht integriert. Der Aktivsubstanzen, z.B. Fraßlockstoffe, enthaltende Film ist einerseits dem Trägersubstrat des Fallenkörpers zugekehrt, und andererseits mit einer Haftklebeschicht abgedeckt, so daß die gesamte funktionelle Einheit der Fangvorrichtung einen zwei- oder mehrschichtigen Aufbau aufweist.

Die Integration des Lockmittels mit dem Fangmittel der Klebetafel der Falle vermag zwar den Nachteil der aufwendigen Handhabung zu umgehen, läßt jedoch das Problem der anhaltenden, gleichmäßigen Lockstofffreisetzung ungelöst.

Den oben angegebenen Schriften zufolge liegen die Attraktantien gelöst oder dispergiert in der Polymerschicht in Sättigungskonzentration vor und migrieren sukzessiv, gesteuert durch das Konzentrationsgefälle, zuerst in die Klebschicht und dann in die Umgebungsluft. Dies führt konsequenterweise zu einer zunehmenden Verarmung der Lockstoffschicht, was sich in abnehmenden Wirkstoffabgaberaten bemerkbar macht. Ein zuverlässiges Monitoring über den gewünschten Nutzungszeitraum ist bei Verwendung dieser Vorrichtungen somit ebenfalls nicht möglich. Darüberhinaus ist die Herstellung dieser Fallen ungünstig, da ein mehrschichtiger Systemaufbau in der Regel einen zusätzlichen technischen Aufwand erfordert.

### C Einteilige systeme mit einer monolithischen attraktantienhaltigen Haftklebeschicht

Noch ungünstiger gestaltet sich die Lockstofffreisetzung bei den z.B. aus JP 53142532 bekannten Insektenfangvorrichtungen.

Die darin beschriebenen Systeme sind durch eine lockstoffhaltige monolithische Haftkleberschicht gekennzeichnet, die gleichzeitig als Attraktantiendispenser und Fangfläche für die Insekten fungiert. Der Haftkleber ist in der Regel kombiniert mit einem Träger, z.B. einem Bogen aus Kunststoff, Pappe oder Papier, auf dem er verankert ist, und mit einer vor der Anwendung zu entfernenden Schutzschicht.

Den Angaben zu Konstruktion und Zusammensetzung der Haftkleberschicht der oben angegebenen Vorrichtungen ist zu entnehmen, daß auch hier die Freisetzung der wirksamen Bestandteile der Attraktantien lediglich durch das Konzentrationsgefälle reguliert wird.

Bekanntermaßen unterliegen auch solche "attractant-inadhesive"-Formulierungen, bei denen die Attraktantien frei in der Polymerschicht vorliegen, einer zeitabhängigen Systemerschöpfung. Eine gleichmäßige und anhaltende Abgabe der wirksamen Bestandteile ist mittels dieser Systeme ebenfalls nicht zu erreichen.
Abschließend läßt sich sagen, daß bei allen marktüblichen und nach dem Stand der Technik bekannten Insektenklebefallen, unabhängig von ihrem Aufbau und ihren Funktionsweisen, der Lockstoff zum Zeitpunkt der Anwendung lediglich in einer Konzentration enthalten ist, die der Sättigungskonzentration der Matrix gleicht. Da diese Vorrichtungen über keine speziellen systemeigenen Mechanismen zur Lockstofffreigabe verfügen, sind sie den Gesetzen der Diffusionskinetik nach, und wie die Praxis der Schädlingsbekämpfung beweist, für eine gleichmäßige und andauernde Lockstofffreigabe ungeeignet.

In US-A-4 992 268 werden insektizid enthaltende Kapseln eingesetzt. Der Lockstoff ist aber nicht in einer haftklebenden Fangschicht eingelagert.

Ausgehend vom vorgenannten Stand der Technik besteht die Aufgabe der vorliegenden Erfindung darin, eine Insektenfangvorrichtung zu schaffen, die sich für eine gleichmäßige und über längere Zeiträume anhaltende Lockstofffreisetzung eignet, gute Insektenfangfähigkeit aufweist, sowie lagerstabil und einfach in der Handhabung ist.

Die Lösung der Aufgabe gelingt überraschenderweise mit einer Insektenklebefalle gemäß den Merkmalen des Hauptanspruchs, welche die vorgenannten Forderungen im vollem Umfang erfüllt. Weitere erfindungswesentliche Ausgestaltungen der Insektenklebefalle sind entsprechend den Unteransprüchen vorgesehen.

Die Aufgabe wird erfindungsgemäß mit einer einteiligen Vorrichtung gemäß Anspruch 1 gelöst, bei der die anhaltende Freisetzung dadurch erzielt wird, daß die wirksamen Bestandteile, das heißt Lockstoffe, an Mikropartikel gebunden sind, welche in die haftklebende Fangschicht eingelagert sind.

Unter dem Begriff Mikropartikel werden im Sinne der vorliegenden Erfindung Feststoffteilchen in einer im wesentlichen sphäroiden Form verstanden, deren Größe vorzugsweise zwischen 1 und 100 µm liegt.

Der Anteil der lockstoffbeladenen Partikel in der Fangschicht ist in weiten Grenzen variierbar. Da diese Feststoffteilchen in der Klebschicht eine Art von Füllstoff darstellen, ist es wichtig, daß ihre Konzentration die Klebrigkeit der Fangschicht nicht beeinflußt. Der bevorzugte Anteil der Mikropartikel in der haftklebenden Schicht beträgt vorzugsweise 0,1 - 10,0 Gew%, die Verteilung weitgehend homogen.

Der Lockstoff kann entweder in die Teilchen eingeschlossen und/oder an der Oberfläche oder in Poren der Partikel adsorbiert sein.
Erfolgt die Bindung der Lockstoffe durch Einschluß im Partikelinneren, so handelt es sich um sogenannte Mikrokapseln. Erfindungsgemäß werden unter dem Begriff 'Mikrokapseln' sowohl echte Mikrokapseln verstanden, das heißt Mikropartikel, in denen ein Wirkstoffkern von einer polymeren Wand umgeben ist, als auch monolithische Mikrokapseln, sogenannte Mikrosphären oder Mikrosphärulen, in denen ein Wirkstoff homogen in einer polymeren Matrix verteilt ist.

Sind die Lockstoffe bei der erfindungsgemäßen Vorrichtung an der Oberfläche der anorganischen oder organischen Substanzen adsorbiert, so handelt es sich um Mikrodispenser in Form von sogenannten Verbundteilchen.

Der besondere Vorteil der Bindung von Lockstoffen an das partikuläre Trägersystem liegt in der dadurch erzielten gleichmäßigen und über einen längeren Zeitraum, z.B. Wochen oder Monate, anhaltenden Lockstofffreisetzung. Die Vielzahl der kleindimensionalen Partikel, deren durchschnittliche Teilchengröße vorzugsweise lediglich 10 µm beträgt, bildet nämlich ein Depot, in das, bedingt durch seine hohe Gesamtoberfläche, sehr hohe Wirkstoffmengen eingelagert werden können. Dies ermöglicht eine beträchtliche Erhöhung der Gesamtwirkstoffbeladung der erfindungsgemäßen Vorrichtung und führt somit zur Verlängerung ihrer Nutzungsdauer, da eine ständige Nachlieferung des Lockstoffs aus den Mikropartikeln für die Aufrechterhaltung der Sättigungskonzentration in der Haftkleberschicht sorgt.

Ein weiterer Vorteil der erfindungsgemäßen Insektenklebefalle besteht darin, daß die Menge von pro Zeiteinheit freigesetztem Lockstoff über die gesamte Freisetzungszeit hinweg konstant ist.
Dies wird durch die Einstellung des entsprechenden Freisetzungsprofils des Lockstoffs einerseits aus den Mikropartikeln und andererseits aus der Kleberschicht realisiert.

Die Freisetzung von Lockstoff innerhalb der erfindungsmäßigen Vorrichtung aus dem partikulären Trägersystem in die Haftklebeschicht erfolgt, je nach Art der verwendeten Partikel, entweder durch Diffusion aus den Mikrokapseln oder durch Desorption von der Oberfläche der Verbundteilchen.

Zur Einstellung des gewünschten Freigabeprofils können, unabhängig vom Freisetzungsmechanismus, Größe und Anzahl, qualitative und quantitative Zusammensetzung der Mikropartikel sowie ihre Lockstoffbeladung genutzt werden. Diese Parameter können technisch beeinflußt werden.

Wie bereits erwähnt, kann die Teilchengröße der zu verwendenden Mikropartikel vorzugsweise zwischen 1 µm und 100 µm variieren. Als besonders bevorzugte Partikelgröße ist der Bereich ≤ 10 µm zu nennen. Die Vorteile wurden vorstehend beschrieben.

Insbesondere im Falle von Mikrokapseln, bei denen eine Lockstofffreisetzung diffusionskontrolliert erfolgt, ist die Wahl des Trägers, z.B. Kapselwandmaterialien bzw. Matrixmaterialien, im Falle von Mikrosphärulen, maßgebend für die Lockstofffreigabe. Als geeignete Trägermaterialien für Mikrokapseln sind folgende Stoffklassen zu nennen:
- Copolymerisate der Methacrylsäure (z.B. Eudragit E®)
- Homo- und Copolymerisate der Acrylsäureester
- Ethylen-Acrylsäureester-Copolymerisate (z.B. LOTRYL®-Typen)
- Ethylcellulose
- Celluloseester (z.B. Cellulosediacetat oder Cellulose-Acetat-Butyrat)
- Polyvinylpyrrolidon
- Polyvinylalkohol
- Polyvinylidenchlorid
- Polyester (z.B. Polyethylenterephthalat)
- Polyurethane
- Wasserlösliche Polysaccharide wie Alginate (z.B. Natriumalgi nat)

Die Vorzugsvarianten der Mikropartikel der erfindungsgemäßen Vorrichtung werden auf Basis von Polymerisaten aus Acrylsäurealkylestern wie Acrylsäureethylester, Acrylsäureisopropylester, Acrylsäure-n-butylester, Acrylsäure-n-hexylester oder Acrylsäure-2-ethylhexylester aufgebaut.
Polymerisate aus den soeben genannten Acrylsäureestern zeichnen sich durch relativ hohe Stoffaufnahme und -abgabekapazitäten aus, weshalb sie insbesondere zum Einsatz als Mikrosphärulen-Einbettungsmaterial von besonderem Wert sind. Darüber hinaus sind sie aufgrund der hohen Diffusivität der aus ihnen hergestellten Filme als Wandmaterialien der Mikrokapseln sehr gut geeignet. Weiterhin können diese Trägerstoffe in verschiedenen Mikrokapsel-Herstellungsverfahren, wie Koazervation oder Grenzflächenpolymerisation verarbeitet werden.

Als weitere besonders geeignete polymere Trägermaterialien für Mikropartikel der erfindungsgemäßen Vorrichtung sind Ethylcellulose und Copolymerisate der Methacrylsäure zu nennen.

Die physiko-chemischen Eigenschaften der Trägermaterialien sind von entscheidender Bedeutung für ihre Beladung mit wirksamen Substanzen, was insbesondere für die monolithischen Mikrokapseln zutrifft. Der Grad der Partikelbeladung mit Lockstoffen kann je nach der gewünschten Wirkungsdauer der erfindungsgemäßen Vorrichtung und den geforderten Lockstofffreisetzungsraten in weiten Grenzen variieren. Die Partikelbeladung muß lediglich zur Aufrechterhaltung der Sättigungskonzentration des Lockstoffes in der Haftklebeschicht während der gesamten Anwendungszeit der Vorrichtung ausreichen. So kann die Lockstoffbeladung im Bereich von 0,1 bis 90, vorzugsweise 10 bis 80, und insbesondere 30 bis 60 Gew. % liegen. Die gewünschten Konzentrationsbereiche sind vom Fachmann durch Variieren der entsprechenden Prozeßparameter zu erreichen.

Eine weitere, besonders vorteilhafte Ausführungsform der erfindungsgemäßen Vorrichtung ist eine Falle, bei der der Lockstoff nicht in Mikropartikel eingeschlossen ist, sondern an seiner Oberfläche oder deren Poren haftet und im Zuge einer Desorption in die Haftkleberschicht hinein abgegeben wird. Diese werden in der vorliegenden Anmeldung als Verbundteilchen bezeichnet. Die erfindungsgemäße Vorrichtung mit Mikropartikeln dieser Art wird bevorzugt dann eingesetzt, wenn ein relativ schneller Wirkungseintritt gefordert wird, z.B. zur Vernichtung einer bereits detektierten Schädlingspopulation geringerer Dichte, wie es häufig in Privathaushalten der Fall ist. Als Ausgangsstoffe bzw. Träger, die sich für diese Art der Oberflächenbeladung eignen, sind in erster Linie pulverisierte anorganische Substanzen zu nennen. Erläuternde, jedoch nicht beschränkende Beispiele sind: kolloidales Siliciumdioxid (z.B. Aerosil® R 972), Titandioxid (TiO₂), Zinkoxid (ZnO), Magnesiumcarbonat (MgCO₃), Calciumcarbonat (CaCO₃), Fettsäuren wie z.B. Stearinsäure, Palmitinsäure, Myristinsäure oder ihre Metallsalze (Aluminiumstearat, Magnesiumstearat, Calciumstearat, Aluminiumlaurat), Aktivkohle, Talk und verschiedene Tonminerale. Von diesen Substanzen wird Siliziumdioxid wegen seiner leichten Verfügbarkeit und Verträglichkeit mit Haftklebstoffen der Fangschicht besonders bevorzugt.

Die physiko-chemischen Eigenschaften des zu bindenden Lockstoffs bestimmen dabei den Typ des einzusetzenden Adsorbats. Insbesondere bei flüssigen Attraktantien, was am häufigsten vorkommt, ist der Grad der Feststoffteilchenbenetzung vom Charakter ihrer Oberfläche abhängig. So wird beispielsweise bei polaren Verbindungen vorzugsweise hydrophiles AEROSIL® (z.B. AEROSIL® 300, AEROSIL®COK 84) eingesetzt, bei apolaren dagegen hydrophobe Typen wie AEROSIL® R 972 oder R 974.

Ferner können zahlreiche Polymere als Trägermaterialien zur Wirkstoff-Oberflächenbindung eingesetzt werden. Voraussetzung ist, daß sie in Pulverform mit einer Feinverteilung ≤ 100 µm vorliegen.

Als geeignete Adsorbate, das heißt Festkörper, die an ihrer Oberfläche Bestandteile gasförmiger oder flüssiger Phasen anreichern können, sind hierzu Stärke, Kraftlignin, Chitin, sowie Cellulose und ihre Derivate , wie Methylcellulose, Hydroxypropylcellulose, Hydroxyethylcellulose, Hydroxypropylcellulose, Carboxymethylcellulose zu nennen.

Ähnlich wie bei Mikrokapseln kann die Teilchengröße der zu verwendenen Verbundteilchen zwischen 1 und 100 µm liegen. Dabei gilt prinzipiell: je kleiner die Partikel, um so größer ist die Grenzfläche und somit die Adsorptionskapazität. Die bevorzugten Partikel weisen einen Teilchendurchmesser ≤10 µm auf.

Beide Mikropartikel-Typen können nach den im Stand der Technik bekannten Verfahren, wie z.B. in der "Encyclopedia of Polymer Science", New York, 1968, Vol.8, beschrieben, hergestellt werden. Zu den Mikroenkapsulierungsmethoden gehören beispielsweise Koazervation, Grenzflächenpolymerisation oder -polykondensation.
Bekanntermaßen werden Mikropartikel vom Typus Verbundteilchen unter Anwendung der Prallkraft und/oder Reibungswärme hergestellt. So können sie beispielsweise im Zentrifugationsverfahren oder nach dem Wurster-Verfahren mittels elektrostatischer Beladung hergestellt werden. Die Auswahl des Herstellverfahrens wird in erster Linie durch die Löslichkeitseigenschaften der Lockstoffe und der Trägersubstanz bestimmt.

Als Lockstoffe werden in den erfindungsgemäßen Insektenklebefallen sowohl Pheromone als auch Fraßstimulantien angewendet, wobei auch Gemische eingesetzt werden können. Von der erstgenannten Gruppe kommen alle bekannten und synthetisch herstellbaren Pheromone in Frage. Hierzu seien beispielsweise genannt: Z,E-9,12-Tetradecadien-1-ol, 14-Methyl-1-octadecen, 9-Tricosen, Tridecenylacetat, Dodecylacetat, Dodecenylacetat, Dodecadienylacetat, Tetradecenylacetat, Tetradeca-dienylacetat, Hexadecenylacetat, Hexadecadienylacetat, Hexadecatrienylacetat, Octadecenylacetat, Octadecadienylacetat, Hexadecenal, Octadecenal, Z13-Icosen-10-on, 7,8-Epoxy-2-methyloctadecan und 8-Methyl-2-decyl-propionat.

Als Fraßlockstoffe wirkende Substanzen sind beispielweise Aminosäuren und ihre Derivate, Ethylenmethylenglycidat, Acetophenon, Amylacetat, Isoamylacetat, Zuckersirup, Vanillin bzw. Kaffee-, Fenchel- und Zimtaromen zu nennen.

Die lockstoffhaltige Haftkleberschicht kann je nach Einsatzgebiet unterschiedliche Klebeeigenschaften aufweisen. Ihr Eigenschaftsprofil, wie z.B. Oberflächenklebrigkeit, Gesamtfläche, Geruchlosigkeit, wird je nach Art der zu fangenden Insekten, Insektengewicht und -größe sowie ihre Bewegungstechnik, eingestellt.

Als besonders vorteilhaft haben sich Kleber mit einem hohen Soforthaftvermögen erwiesen, bei denen auch sehr kleine Insekten bei flüchtiger. Berührung an der Filmoberfläche haften bleiben. Haftklebende Eigenschaften können vom Fachmann durch gezielte Auswahl der Ausgangsstoffe erzielt werden. So können beispielweise als Klebergrundlage haftklebende Polymere, wie Mischpolymerisate aus Acrylsäure und Acrylsäureestern, insbesondere Acrylsäurealkylestern, wie 2-Ethylhexylacrylat, n-Butylacrylat, verwendet werden.
Bei nicht haftklebenden Copolymerisaten, wie z.B. Polystyrolisoprenstyrol, Polystyrolbutadienstyrol, Polyethylenvinylacetat und Polyethylenacrylsäureester müssen zur Erzielung der gewünschten Eigenschaften geeignete Hilfstoffe zugesetzt werden. Dazu dienen vor allem harzartige Stoffe, insbesondere Kolophonium und dessen Derivate, Polyterpene und KohlenwasserstoffHarze. Dabei ist von wesentlicher Bedeutung, daß der Kleber auch beim Zusatz von Klebrigmachern weitestgehend geruchlos bleibt, damit die Köderwirkung der Lockstoffe nicht negativ beeinflußt wird. In Hinblick auf diese Eigenschaft seien hier HYDROGRAL®M und HYDROGRAL®MA (Methylharzester des hydrierten Kolophoniums) als besonders geeignet hervorgehoben.

Darüber hinaus ist es wichtig, daß die Haftkleberschicht der erfindungsgemäßen Insektenklebefalle über den gesamten Anwendungszeitraum, der sich über einige Monate erstreckt, gutes Haftvermögen aufweist. Um Alterungsbeständigkeit dieser Schicht zu erreichen, werden als weitere Zusatzstoffe Antioxidantien, wie z.B. Butylhydroxytoluol verwendet.

Die Fläche der partikelbeladenen Fangschicht und somit die Abmessungen der erfindungsgemäßen Insektenklebefalle richten sich nach dem gewünschten Freigabeprofil der Lockstoffe, das wiederum vom Indikationsgebiet, z.B. Insektenart, Größe und Art des Raumes, in dem die Falle eingesetzt wird, abhängig ist.

Bevorzugt besteht die Falle aus einem flächigen Substrat (meistens Längsstreifen), das durch einen faltbaren Zuschnitt gekennzeichnet ist und sich somit zu verschiedenen Körpern, z.B. Prismen, Quadern, Würfeln oder Kugeln, formen läßt.

Bevorzugt weist dieser Zuschnitt Klebelaschen, vorzugsweise selbstklebende, oder Stecklaschen auf, damit er in Gebrauchsform gebracht werden kann. Ein solcher faltbarer Zuschnitt hat den Vorteil, daß für Verpackung wenig Packstoff und für Transport und Lagerung wenig Platz benötigt wird.

Gemäß einer besonders vorteilhaften Ausführungsform der erfindungsgemäßen Insektenklebefalle ist die Rückseite der Trägerschicht mit einem selbstklebenden Streifen beliebiger Breite versehen, um die Falle auf senkrechten Flächen fixieren zu können.
Je nach Applikationserfordernissen kann die erfindungsgemäße Insektenfalle auch mit einer Öse zum Aufhängen ausgestattet sein.

Die erfindungsgemäßen Insektenfallen werden in bekannter Weise hergestellt, indem Lockstoffpartikel enthaltende Haftklebemassen auf geeignete Substrate aufgetragen werden, und nach erfolgter Filmbildung mittels Abkühlung (bei Hotmeltverfahren) oder Verdunstung der Dispersions- bzw. Lösemittel (bei Lösemittelverfahren) mit Schutzmaterialien abgedeckt werden. Die so entstandenen Laminate werden anschließend im Schneid- bzw. Stanzverfahren vereinzelt und die daraus resultierenden Fallen verpackt.

Eine besonders vorteilhafte Ausführungsform der erfindungsgemäßen Insektenfalle ist eine Falle, die in ihrer Endausgestaltung durch den Anwender hergestellt wird, indem die haftklebende Fangschicht unmittelbar vor dem Einsatz als eine fließfähige, Lockstoffpartikel enthaltende Formulierung auf den Träger der Vorrichtung gesprüht oder aufgestrichen wird.

Die erfindungsgemäße Insektenfalle wird zur Abwehr oder Bekämpfung von Schadinsekten eingesetzt. Ein bevorzugtes Anwendungsgebiet ist Abwehr und Bekämpfung von Lebensmittelmotten und Küchenschaben in Innenräumen.

Die Erfindung wird anhand des folgenden Beispiels näher erläutert.

### BEISPIEL

In einem temperierbaren Heißschmelzbehälter wurden Pellets (20 Gewichtsanteile) eines Ethylen-Acrylsäureester-Copolymerisats (LOTRYL 35 _{BA} 40, Produkt der ELF ATOCHEM) mit 36,4 Gewichtsanteilen eines Phthalsäureesters von technischem Hydroabietylalkohol (CELLOLYN 21- _{E}) und 20 Gewichtsanteile eines teilhydrierten Kolophoniumesters
(HERCOLYN D-E) bei 120 °C aufgeschmolzen und bis zur Homogenität vermischt. Die so erhaltene Schmelze wird unter Rühren in Schritten von 4 °C auf 90 °C gekühlt.
In die Schmelze werden langsam 3,6 Gewichtsanteile eines in Polymethacrylat
(EUDRAGIT L 30 D, Röhm Pharma) verkapselten Pheromongemisches aus Z,E-9,12-Tetradecadien-l-yl und Acetates (Sexualpheromon) eingerührt, wobei der Füllungsgrad der Mikrokapseln 42 Gew.% und ihr mittlerer Durchmesser 12,5 µm betrugen. Nachdem eine gleichmäßige Partikelverteilung in der Schmelze erreicht worden ist, wurde der partikelhaltige Haftschmelzkleber mittels Rakelauftrags mit einem Flächengewicht von 100 g/m² auf Karton (Unistar 218 der Fa. Weig) ausgestrichen; nach dem Erkalten wird ein silikonisiertes Papier auflaminiert. Aus dem so erhaltenen Laminat werden rechteckige Stücke mit einer Haftklebefläche von 100 cm² (165 x 61 mm) ausgeschnitten, die jeweils 15 mg Z,E 9,12-Tetradecadien-1-yl-acetat enthalten. Diese werden in einen Siegelrandbeutel aus einer gasundurchlässigen PET-Folie (Polyethylenterephthalat, MELINEX, 30 µm) eingepackt.

## Patentansprüche

1. Insektenklebefalle, umfassend eine Trägerschicht, eine lockstoffhaltige, zum Fangen von Insekten geeignete haftklebende Schicht und eine Schutzschicht, **dadurch gekennzeichnet, daß** die haftklebende Fangschicht als Lockstoff-Depot wirkende lockstoffbeladene Mikropartikel mit angemessenem Freisetzungsprofil zur langzeitigen Aufrechterhaltung der Sättigungskonzentration in der haftklebenden Fangschicht und damit zur langzeitigen Aufrechterhaltung des Lockstofffreisetzungsprofils aus der Fangschicht eingelagert enthält.

2. Insektenklebefalle nach Anspruch 1, **dadurch gekennzeichnet, daß** die Mikropartikel eine Teilchengröße von 1 - 100 µm, vorzugsweise ≤ 10 µm, aufweisen.

3. Insektenklebefalle nach Anspruch 1, **dadurch gekennzeichnet, daß** der Anteil der lockstoffbeladenen Mikropartikel in der Fangschicht 0,1 - 10,0 Gew. % beträgt.

4. Insektenklebefalle nach Anspruch 1, **dadurch gekennzeichnet, daß** die lockstoffbeladenen Mikropartikel Mikrokapseln sind, deren Wände aus polymeren Materialien bestehen, die für Lockstoffe durchlässig sind.

5. Insektenklebefalle nach Anspruch 4, **dadurch gekennzeichnet, daß** die polymeren Wandmaterialien der Mikrokapseln aus der Gruppe ausgewählt sind, die besteht aus Polyacrylaten, Polyester, Polycarbonaten, Polymethylmethacrylaten, Polyvinylpyrrolidon, Polyvinylalkohol, Polystyrol, Polyvinylchlorid, Polyvinylenchlorid, Polyethylenterephtalat, Polybutylenterephtalat, Polyamid, Celluloseether, Celluloseester, Polyurethanen und deren Mischungen.

6. Insektenklebefalle nach einem oder mehreren der vorangehenden Ansprüche, **dadurch gekennzeichnet, daß** die Mikropartikel anorganische oder organische Partikel sind, an deren Oberfläche oder in deren Poren Lockstoffe adsorbiert sind.

7. Insektenklebefalle nach einem oder mehreren der vorstehenden Ansprüche, **dadurch gekennzeichnet, daß** die anorganischen Partikel aus TiO₂, SiO₂, ZnO, MgCO₃, CaCO₃, Aktivkohle, Tonmineralen und Talk, und die organischen Partikel aus Stärke, Kraftlignin, Chitin, Cellulose und ihren Derivaten ausgewählt sind.

8. Insektenklebefalle nach einem oder mehreren der vorstehenden Ansprüche, **dadurch gekennzeichnet, daß** die Lockstoffe Pheromone oder Fraßlockstoffe sind.

9. Insektenklebefalle nach einem oder mehreren der vorangehenden Ansprüche, **dadurch gekennzeichnet, daß** das Pheromon aus Z,E-9,12-Tetradecadien-1-ol, 14-Methyl-1-octadecen, 9-Tricosen, Tridecenylacetat, Dodecylacetat, Dodecenylacetat, Dodecadienylacetat, Tetradecenylacetat, Tetradeca-dienylacetat, Hexadecenylacetat, Hexadecadienylacetat, Hexadecatrienylacetat, Octadecenylacetat, Octadecadienylacetat, Hexadecenal, Octadecenal, Z13-Icosen-10-on, 7,8-Epoxy-2-methyloctadecan und 8-Methyl-2-decyl-propionat, und/oder der Fraßlockstoff aus Aminosäuren und ihren Derivaten, Ethylenmethylenglycidat, Acetophenon, Amylacetat, Isoamylacetat, Zuckersirup, Vanillin bzw. Kaffee-, Fenchel- und Zimtaromen ausgewählt ist.

10. Insektenklebefalle nach einem oder mehreren der vorstehenden Ansprüche, **dadurch gekennzeichnet, daß** sie als flächiges Substrat vorliegt, welches zu Tafeln, Kugeln, Prismen, Quadern, Würfeln oder anderen den Insektenfang fördernden Ausgestaltungen geformt ist.

11. Insektenklebefalle nach einem oder mehreren der vorstehenden Ansprüche, **dadurch gekennzeichnet, daß** die Trägerschicht mit ihre Applikation erleichternden Elementen, vorzugweise mit rückseitig angebrachten Klebestreifen, ausgestattet ist.

12. Verfahren zur in-situ-Erzeugung einer Insektenklebefalle, umfassend eine Trägerschicht und eine lockstoffhaltige, zum Fangen von Insekten geeignete haftklebende Schicht, wobei die haftklebende Fangschicht als Lockstoff-Depot wirkende lockstoffbeladene Mikropartikel mit angemessenem Freisetzungsprofil zur langzeitigen Aufrechterhaltung der Sättigungskonzentration in der haftklebenden Fangschicht und damit zur langzeitigen Aufrechterhaltung des Lockstofffreisetzungsprofils aus der Fangschicht eingelagert enthält, wobei die lockstoffbeladene Mikropartikel enthaltende Fangschicht als fließfähige Formulierung unmittelbar vor dem Einsatz durch Sprühen oder Streichen auf die Trägerschicht aufgetragen wird.

13. Verwendung der Insektenklebefalle nach Anspruch 1 zur Abwehr oder Bekämpfung von Schadinsekten insbesondere zur Abwehr und Bekämpfung von Lebensmittelmotten und Küchenschaben.

## Claims

1. Adhesive insect trap, comprising a carrier layer, an attractant-containing pressure-sensitive adhesive layer suitable for trapping insects, and a protective layer, **characterized in that** the pressure-sensitive adhesive trapping layer contains attractant-loaded microparticles, acting as an attractant depot, which have an appropriate release profile for long-term maintenance of the saturation concentration in the pressure-sensitive adhesive trapping layer and thereby for the long-term maintenance of the profile of attractant release from the trapping layer.

2. Adhesive insect trap according to claim 1, **characterized in that** the microparticles have a particle size of 1 - 100 µm, preferably ≤ 10 µm.

3. Adhesive insect trap according to claim 1, **characterized in that** the proportion of attractant-loaded microparticles in the trapping layer is 0.1 - 10.0 wt-%.

4. Adhesive insect trap according to claim 1, **characterized in that** the attractant-loaded microparticles are microcapsules, the walls of which consist of polymeric materials permeable to attractants.

5. Adhesive insect trap according claim 4, **characterized in that** the polymeric wall materials of the microcapsules are chosen from the group consisting of: polyacrylates, polyester, polycarbonates, polymethyl-methacrylates, polyvinyl pyrrolidone, polyvinyl alcohol, polystyrene, polyvinyl chloride, polyvinylene chloride, polyethylene terephthalate, polybutylene terephthalate, polyamide, cellulose ether, cellulose ester, polyurethanes and their mixtures.

6. Adhesive insect trap according one or more of the preceding claims, **characterized in that** the microparticles are inorganic or organic particles, at the surface or in the pores of which attractants are adsorbed.

7. Adhesive insect trap according one or more of the preceding claims, **characterized in that** the inorganic particles are chosen from TiO₂, SiO₂, ZnO, MgCO₃, CaCO₃, active carbon, clay minerals and talc, and the organic particles are chosen from starch, kraft lignin, chitin, cellulose and its derivatives.

8. Adhesive insect trap according one or more of the preceding claims, **characterized in that** the attractants are pheromones or feeding attractants.

9. Adhesive insect trap according one or more of the preceding claims, **characterized in that** the pheromone is chosen from: Z,E-9,12-tetradecadiene-1-ol, 14-methyl-1-octadecene, 9-tricosene, tridecenyl acetate, dodecyl acetate, dodecenyl acetate, dodecadienyl acetate, tetradecenyl acetate, tetradeca-dienyl acetate, hexadecenyl acetate, hexadecadienyl acetate, hexadecatrienyl acetate, octadecenyl acetate, octadecadienyl acetate, hexadecenal, octadecenal, Z13-icosen-10-on, 7,8-epoxy-2-methyl octadecane, and 8-methyl-2-decyl-propionate,
and/or that the feeding attractant is chosen from: amino acids and their derivatives, ethylene methylene glycidate, acetophenone, amyl acetate, isoamyl acetate, sugar syrup, vanillin, or coffee, fennel and cinnamon flavors.

10. Adhesive insect trap according one or more of the preceding claims, **characterized in that** it is present as a flat-shaped substrate which is formed into panels, spheres, prisms, right parallelepipeds, cubes or other embodiments promoting the trapping of insects.

11. Adhesive insect trap according one or more of the preceding claims, **characterized in that** the carrier layer is equipped with elements facilitating the application of the trap, preferably with adhesive strips fixed to its rear side.

12. Process for the in-situ production of an adhesive insect trap, comprising a carrier layer and an attractant-containing pressure-sensitive adhesive layer suitable for trapping insects, with the said pressure sensitive adhesive trapping layer containing attractant-loaded microparticles, acting as an attractant depot, which have an appropriate release profile for long-term maintenance of the saturation concentration in the pressure-sensitive adhesive trapping layer and thereby for the long-term maintenance of the profile of attractant release from the trapping layer, and with the trapping layer, which contains attractant-loaded microparticles, being applied to the said carrier layer as a flowable formulation by means of spraying or spreading immediately prior to use.

13. Application of the adhesive insect trap according to Claim 1 for repelling or combating destructive insects, especially for the repelling and control of food moths and cockroaches.

## Revendications

1. Piège à insectes collant, comprenant une couche porteuse, une couche auto-adhésive contenant une matière attirante, adaptée à la capture d'insectes et une couche protectrice, **caractérisé en ce que** la couche de capture auto-adhésive contient des microparticules chargées de matière attirante intercalées dans celle-ci agissant comme dépôt de matière attirante avec un profil de libération approprié pour le maintien à long terme de la concentration de saturation dans la couche de capture auto-adhésive et ainsi pour le maintien à long terme du profil de libération de la matière attirante de la couche de capture.

2. Piège à insectes collant selon la revendication 1, **caractérisé en ce que** les microparticules présentent une taille de particule de 1 à 100 µm, de préférence ≤ 10 µm.

3. Piège à insectes collant selon la revendication 1, **caractérisé en ce que** le pourcentage de microparticules chargées de matières attirantes dans la couche de capture est de 0,1 à 10,0 % en poids.

4. Piège à insectes collant selon la revendication 1, **caractérisé en ce que** les microparticules chargées de matières attirantes sont des microgélules dont les parois sont composées de matériaux polymères perméables aux matières attirantes.

5. Piège à insectes collant selon la revendication 4, **caractérisé en ce que** les matériaux polymères des parois des microgélules sont sélectionnés parmi le groupe constitué de polyacrylates, polyesters, polycarbonates, polyméthylméthacrylates, pyrrolidone de polyvinyle, alcool de polyvinyle, polystyrène, chlorure de polyvinyle, chlorure de polyvinylène, polyéthylène téréphtalate, polybutylène téréphtalate, polyamide, éthers de cellulose, esters de cellulose, polyuréthannes et leurs mélanges.

6. Piège à insectes collant selon une ou plusieurs des revendications précédentes, **caractérisé en ce que** les microparticules sont des particules inorganiques ou organiques, à la surface ou dans les pores desquelles des matières attirantes sont adsorbées.

7. Piège à insectes collant selon une ou plusieurs des revendications précédentes, **caractérisé en ce que** les particules inorganiques sont sélectionnées parmi TiO₂, SiO₂, ZnO, MgCO₃, CaCO₃, le charbon actif, les minéraux argileux et les talcs, et les particules organiques parmi l'amidon, la kraftlignine, la chitine, la cellulose et leurs dérivés.

8. Piège à insectes collant selon une ou plusieurs des revendications précédentes, **caractérisé en ce que** les matières attirantes sont des phéromones ou des matières attirantes d'ingestion.

9. Piège à insectes collant selon une ou plusieurs des revendications précédentes, **caractérisé en ce que** le phéromone est sélectionné parmi Z, E-9, 12-tétradécane-1-ol, 14-méthyle-1-octadécène, 9-tricosène, l'acétate de tridécènyle, l'acétate de dodécyle, l'acétate de dodécényle, l'acétate de dodécadiényle, l'acétate de tétradécényle, l'acétate de tétradécadiényle, l'acétate d'hexadécényle, l'acétate d'hexadécadiényle, l'acétate d'hexadécatriényle, l'acétate d'octadécényle, l'acétate d'octadécadiényle, l'hexadécénal, l'octadécénal, le Z13-icosène-10-on, le 7, 8-epoxy-2-méthyloctadécane et le 8-méthyle-2-décyle-propionate, et/ou la matière attirante d'ingestion parmi les acides aminés et leurs dérivés, l'éthylène méthylène glycidate, l'acétophénone, l'acétate d'amyle, l'acétate d'isoamyle, le sirop de sucre, la vanilline ou les arômes de café, de fenouil et de cannelle.

10. Piège à insectes collant selon une ou plusieurs des revendications précédentes, **caractérisé en ce qu'**il se présente comme substrat plan, formé en panneaux, billes, prismes, parallélépipèdes, cubes ou tout autre configuration favorisant la capture des insectes.

11. Piège à insectes collant selon une ou plusieurs des revendications précédentes, **caractérisé en ce que** la couche-support est dotée d'éléments facilitant son application, de préférence de bandes adhésives placées à la face arrière de celle-ci.

12. Procédé pour la production in situ d'un piège à insectes collant comprenant une couche-support et une couche autocollante contenant une matière attirante appropriée à la capture d'insectes, la couche de capture autocollante contenant des microparticules chargées de matière attirante intercalée dans celles-ci et agissant comme dépôt de matière attirante avec un profil de libération approprié pour le maintien à long terme de la concentration de saturation dans la couche de capture autocollante et ainsi pour le maintien à long terme du profil de libération de la matière attirante de la couche de capture, la couche de capture contenant les microparticules chargées de matière attirante étant appliquée directement par pulvérisation ou enduction sur la couche-support comme formulation fluide avant son utilisation.

13. Utilisation du piège à insectes collant selon la revendication 1, pour la défense et la lutte contre les insectes nuisibles, en particulier, pour la défense et la lutte contre les cafards et les mites des aliments.
